# DEMANDE DE BREVET EUROPEEN

(11) **EP 4 810 370 A1**
(43) Date de publication de la demande: **23.09.2026**
(21) Numéro de dépôt: 26163488.5
(22) Date de dépôt: 10.03.2026
(51) Int. Cl.: B64D 11/00, B64D 11/06

(54) **UNITÉ DE CONTRÔLE SANS-FIL POUR PASSAGER D'AÉRONEF, OPÉRATIONNELLE DURANT TOUTES LES PHASES DE VOL, ET SYSTÈME COMPRENANT UNE TELLE UNITÉ**

(30) Priorité: 18.03.2025 FR 2502751
(71) Demandeur: Airbus Atlantic, 17300 Rochefort (FR)
(72) Inventeur: SANDANAM, Serge, 17300 ROCHEFORT (FR)
(74) Mandataire: Santarelli

(57) **Abrégé**

L'invention porte sur une unité de contrôle (10) permettant à un passager d'aéronef de commander son environnement de siège (200). L'unité comprend une tablette tactile (11) communicant sans-fil avec une station d'accueil (12) configurée pour recevoir ladite tablette. La station d'accueil (12) est reliée à une SFCU (20), ainsi qu'à un système IFE (30). La tablette tactile (11) transmet à la station d'accueil (12) à la fois des commandes d'actionnement du siège et des commandes de divertissement. Selon l'invention, la station d'accueil (12) intègre un module de médiation (121) réalisant une ségrégation entre les commandes d'actionnement et les commandes de divertissement. Le module de médiation (121) achemine les commandes d'actionnement vers la SFCU (20), et dirige les commandes de divertissement directement vers le système IFE (30) via une liaison dédiée (85), assurant ainsi un fonctionnement continu durant toutes les phases du vol.

L'invention porte également sur un système de contrôle (100) comprenant une telle unité ainsi qu'une ECU (40) pour piloter un ensemble d'actionnement (50) du siège.

## Description

### DOMAINE TECHNIQUE

La présente invention appartient au domaine des systèmes de contrôle d'un siège et de son environnement pour passager d'aéronef, notamment les systèmes de contrôle sans-fil. Elle concerne plus particulièrement une unité de contrôle sans-fil opérationnelle durant toutes les phases de vol et un système comprenant cette unité.

Les unités de contrôle sans-fil pour passager sont plus connus dans le jargon de l'aviation commerciale par leur sigle anglais WPCU (*Wireless Passenger control Unit*)*.*

L'invention trouve une application directe, mais non exclusive, dans les classes supérieures d'avions de ligne (classe affaires et première classe).

### ÉTAT DE L'ART

Historiquement, l'évolution des systèmes de contrôle passagers dans l'industrie aéronautique a suivi une trajectoire marquée par l'intégration progressive de technologies de plus en plus sophistiquées, toujours à la recherche de plus de confort et de commodités. Les premiers dispositifs embarqués se limitaient à des claviers ou à des panneaux de commande rudimentaires, souvent placés dans l'accoudoir, qui permettaient uniquement d'ajuster l'inclinaison du siège ou d'appeler le personnel de bord. Par la suite, l'introduction d'écrans tactiles a permis aux passagers d'accéder à un nombre croissant de fonctionnalités, telles que le réglage de l'éclairage, la gestion du divertissement en vol IFE (*In-Flight Entertainment*) ou encore la configuration fine de la position du siège. Dans le prolongement de ces évolutions, les unités de contrôle sans fil (WPCU) ont fait leur apparition, offrant une ergonomie améliorée grâce à leur portabilité.

D'un point de vue technique, les dispositifs de contrôle passagers actuels intègrent souvent des modules électroniques dédiés à la communication avec les différents actionneurs du siège (moteurs électriques, mécanismes de verrouillage, éclairage individuel, etc.). Les claviers ou écrans tactiles traditionnels sont généralement reliés par des câbles à des unités de contrôle fonctionnel du siège SFCU (*Seat Function Control Unit*)*,* logées dans le bloc siège ou dans un boîtier informatique central. Les WPCU, quant à elles, reposent sur des protocoles de communication sans fil pour transmettre les commandes aux mêmes actionneurs, via les SFCU, tout en prévoyant des dispositifs de sécurité élémentaires pour éviter les interférences radio ou les pertes de synchronisation.

Le brevet FR3107255B1 décrit une WPCU pour la commande d'un siège d'aéronef et de son environnement via une liaison sans fil, en établissant un protocole d'appairage simplifié entre un appareil électronique portable (PED) et une SFCU. Dans cette architecture, les fonctions IFE et celles d'actionnement du siège sont intégrées dans une même chaîne électronique et logicielle. Le PED utilisé dans cette solution peut être un appareil personnel, ce qui n'est pas compatible avec certaines contraintes de cybersécurité.

L'ensemble de ces solutions actuelles se heurtent généralement à des contraintes de certification qui se traduisent par une limitation stricte de leur utilisation lors des phases critiques de vol, à savoir de roulage, décollage et atterrissage, dites TTL (*Taxi Take-off Landing*)*.*

En effet, les systèmes actuels présentent un niveau de criticité DAL E, selon les normes ED-12C et DO-178C (*Software considerations in airborne systems and equipment certification*)*.* Ce niveau, de criticité basse, correspond aux exigences minimales et implique que les systèmes ne sont pas reconnus comme suffisamment sûrs pour fonctionner en continu lors des phases TTL ou dans des situations nécessitant l'absence d'interférences électriques. Plus précisément, le niveau DAL E ne requiert qu'un minimum de démonstrations en termes de fiabilité et de gestion des défaillances, ce qui conduit à la neutralisation des dispositifs pendant les phases de vol critiques afin de minimiser tout risque potentiel, que ce soit l'interférence avec des systèmes de pilotage ou l'incapacité du passager à agir rapidement en cas d'urgence. Il en résulte également que même les fonctionnalités de divertissement en vol (IFE), pourtant moins susceptibles de perturber la sécurité, se retrouvent bloquées tout autant que les fonctions d'actionnement du siège qui sont seules susceptibles de générer des risques durant les phases TTL.

Il apparaît également que les restrictions imposées répondent à des considérations de sécurité liées au risque d'interaction entre les signaux radio et les systèmes de navigation. Ainsi, durant le décollage et l'atterrissage, les systèmes de divertissement et d'actionnement du siège sont désactivés ou fortement limités.

Cette restriction de fonctionnement, particulièrement pendant le roulage, le décollage et l'atterrissage, peut néanmoins engendrer un inconfort notable pour les passagers. Durant ces phases, il est fréquent que certains souhaitent mieux ajuster leur siège, modifier l'éclairage individuel pour optimiser leur confort de lecture ou solliciter le personnel de cabine. De même, dans les classes supérieures, où les sièges convertibles offrent de multiples options de réglage, l'impossibilité de configurer l'assise ou l'environnement immédiat au moment voulu peut constituer une source de frustration. Les passagers attachent en effet une grande importance à la continuité de service et à la possibilité de personnaliser leur confort à tout instant, que ce soit pour interagir avec le système de divertissement ou pour bénéficier d'un service dédié durant toutes les phases de vol.

En conséquence, il subsiste un besoin clairement identifié pour un système de contrôle passager qui ne soit pas limité par ces restrictions, afin de permettre une utilisation ininterrompue pendant l'ensemble des phases de vol. Les compagnies aériennes, soucieuses d'offrir toujours plus de confort et d'autonomie à leurs clients, recherchent ainsi des solutions capables de fonctionner sans interruption, tout en garantissant un niveau de sécurité conforme aux standards réglementaires en vigueur.

### PRÉSENTATION DE L'INVENTION

La présente invention vise à pallier tout ou partie des inconvénients de l'art antérieur exposés ci-avant en proposant une solution innovante, certifiée DAL D, permettant de commander sans interruption le siège passager et son environnement dans toutes les phases de vol (TTL et croisière).

Un objectif de l'invention est donc de mettre en place une architecture partitionnée qui isole les fonctions critiques (commandes d'actionnement du siège) des fonctions non critiques (commandes IFE). Cette séparation requiert l'implémentation de mécanismes de protection tant sur le plan logiciel - via des couches d'abstraction et des contrôles d'intégrité - que sur le plan matériel, en s'appuyant sur des modules électroniques dédiés pour limiter les interférences électromagnétiques.

Un autre objectif de l'invention est d'assurer la robustesse du protocole de communication entre les différents éléments, notamment via des algorithmes de vérification des données, une gestion fine de la latence et des techniques de récupération d'erreurs, afin de répondre aux contraintes en temps réel de l'environnement avionique.

À cet effet, la présente invention a pour objet une unité de contrôle permettant à un passager d'aéronef de commander son environnement de siège, ladite unité comprenant une tablette tactile apte à communiquer sans-fil et une station d'accueil capable de recevoir ladite tablette, ladite station étant configurée pour être reliée à une unité de contrôle fonctionnel du siège, dite SFCU, et à un système de divertissement en vol, dit système IFE, la tablette tactile étant configurée pour envoyer à la station d'accueil des commandes d'actionnement du siège et des commandes de divertissement. Cette unité de contrôle est remarquable en ce que la station d'accueil comprend un module de médiation configuré pour opérer une ségrégation entre les commandes d'actionnement du siège et les commandes de divertissement, et en ce que le module de médiation est configuré pour acheminer les commandes d'actionnement du siège vers la SFCU reliée à la station d'accueil et pour acheminer les commandes de divertissement vers le système IFE via une liaison directe.

Selon un mode de réalisation, la SFCU est intégrée à la station d'accueil.

Selon un mode de réalisation, la liaison directe est un câble Ethernet et les commandes d'actionnement du siège sont transmises à la SFCU via des bus de données CAN.

Selon un mode de réalisation, le module de médiation comprend des moyens matériels et logiciels de filtration et d'analyse des trames échangées entre la tablette tactile et la station d'accueil.

Plus spécifiquement, les moyens matériels et logiciels du module de médiation comprennent au moins un commutateur intelligent.

Selon un mode de réalisation, l'unité de contrôle comprend en outre un moyen de verrouillage mécanique de la tablette tactile dans la station d'accueil, ledit moyen de verrouillage comportant un servomoteur maintenant une position verrouillée en cas de coupure d'alimentation électrique.

Selon un aspect de l'invention, le module de médiation est configuré pour assurer une séparation fonctionnelle des données conforme à un niveau DAL D selon la norme DO-178B.

L'invention a également pour objet un système de contrôle d'un environnement de siège pour passager d'aéronef, comprenant une unité de contrôle telle que présentée, une SFCU, un système IFE et une unité de contrôle électronique, dite ECU.

Selon un mode de réalisation, la SFCU transmet les commandes d'actionnement reçues de l'unité de contrôle à l'ECU, celle-ci étant configurée pour piloter directement un ensemble d'actionneurs de l'environnement de siège.

Un autre objet de l'invention est un aéronef comprenant au moins un tel système de contrôle.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une unité de contrôle sans-fil pour passager d'aéronef et d'un système associé, conformes aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : un schéma de l'architecture d'une unité de contrôle dans un système de contrôle de siège selon un mode de réalisation de l'invention ;
- Figure 2 : une vue en perspective d'une unité de contrôle installée dans un environnement de siège selon un mode de réalisation de l'invention ;
- Figure 3 : un exemple d'interface graphique d'une barre de commande rapide de la station d'accueil selon un mode de réalisation de l'invention ;
- Figure 4 : une vue en perspective d'un environnement de siège dans lequel une unité de contrôle est installée, avec une vue de détail sur cette unité selon un autre mode de réalisation de l'invention ;
- Figure 5 : un schéma fonctionnel de l'architecture logicielle du système de contrôle ;
- Figure 6 : un diagramme séquentiel d'un exemple d'utilisation de l'unité de contrôle.

### DESCRIPTION DÉTAILLÉE DE MODES DE RÉALISATION

Dans le mode de réalisation décrit ci-après, on fait référence à une unité de contrôle sans-fil permettant à un passager d'aéronef de commander son siège et l'environnement qui lui est associé. Cette unité est principalement destinée aux fauteuils convertibles des classes affaires et première classe.

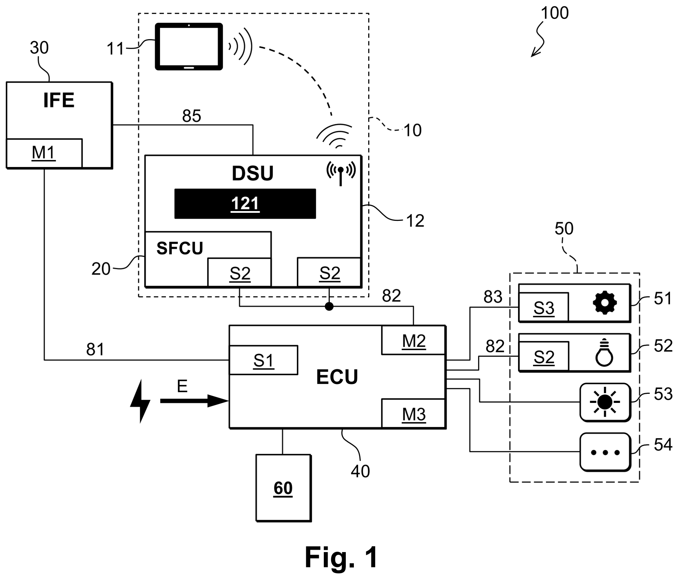

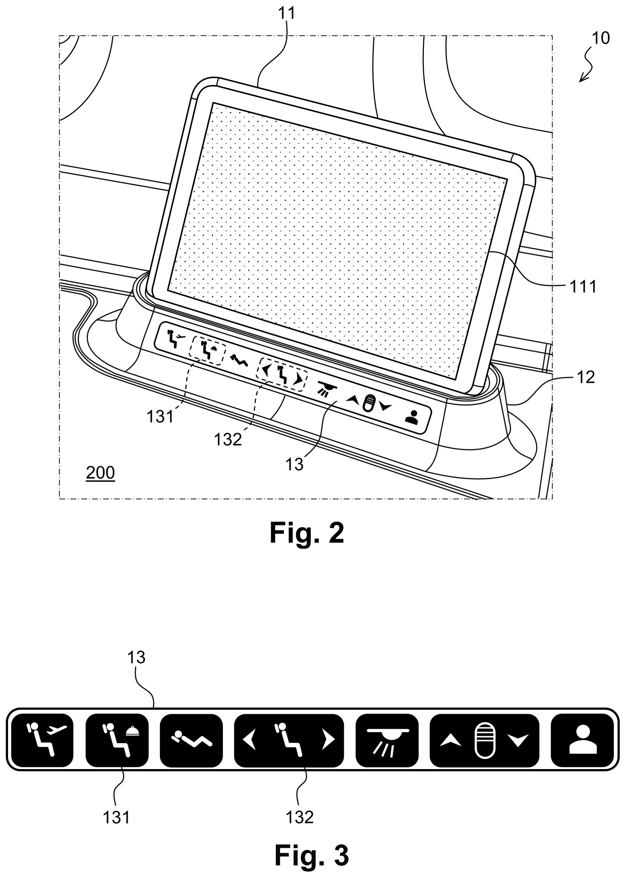

La figure 1 représente une unité de contrôle 10 d'un siège et de son environnement au sein d'un aéronef, ladite unité évoluant dans un système de contrôle 100 plus général. L'unité de contrôle 10 comprend une tablette tactile 11 et une station d'accueil multifonction 12, dite DSU (*Docking Station Unit*)*,* destinée à recevoir la tablette dans une position de stockage représentée en figure 2. Cette position assure une liaison physique entre la tablette 11 et la station d'accueil 12, permettant à la fois un branchement électronique pour recharger ladite tablette et assurer une communication filaire via des ports adaptés, ainsi qu'un maintien mécanique stable de la tablette, avec possibilité de verrouillage dans certaines situations.

La tablette tactile 11, en raison de sa portabilité et de son utilisation possible en dehors de la station d'accueil 12, est également apte à communiquer sans fil avec ladite station via un protocole radio tel que le Wi-Fi, le Bluetooth ou tout autre protocole à faible latence.

L'unité de contrôle 10 permet, classiquement, de commander l'actionnement du siège, via une unité de contrôle fonctionnel du siège 20, dite SFCU, elle-même reliée à une unité de contrôle électronique 40, dite ECU, et de commander un système de divertissement en vol 30, dit IFE. Ensemble, ces éléments constituent le système de contrôle 100.

Selon l'invention, la station d'accueil 12 intègre un module matériel et logiciel 121, désigné ci-après « module de médiation », dont la fonction est d'assurer une ségrégation robuste entre les flux de données liés à l'IFE 30 et ceux relatifs à l'actionnement du siège. Ce module de médiation 121 agit concrètement comme un pare-feu ou un commutateur intelligent en filtrant et en analysant les trames échangées entre la tablette tactile 11 et les autres éléments afin de garantir qu'aucune interaction indésirable ne puisse se produire entre les fonctions critiques d'actionnement du siège et les fonctions non critiques de divertissement. Cette ségrégation stricte permet de satisfaire aux exigences élevées de sûreté de fonctionnement et de cybersécurité imposées par l'environnement avionique, notamment en évitant toute interférence mutuelle ou contamination croisée entre les domaines critiques et non critiques.

Dans l'exemple illustré, la tablette tactile 11 envoie exclusivement ses commandes à la station d'accueil 12. Le module de médiation 121 analyse alors ces commandes afin de déterminer si elles concernent l'actionnement du siège ou les services IFE. Lorsque la commande relève de l'actionnement du siège, le module de médiation 121 achemine l'information vers la SFCU 20, physiquement raccordée à la station d'accueil 12 par un câblage interne. La SFCU 20 peut être intégrée dans la station d'accueil 12, comme ici, ou déportée de celle-ci.

À l'inverse, lorsqu'il s'agit de requêtes multimédia ou de divertissement, le module de médiation 121 dirige le flux de données vers le système IFE 30 au moyen d'une liaison Ethernet 85 reliant directement la station d'accueil 12 audit système IFE. Cette double orientation des données constitue un point clé pour satisfaire aux contraintes de sûreté et de certification, notamment de niveau DAL D, autorisant ainsi l'utilisation continue du système durant toutes les phases de vol, y compris les phases critiques TTL.

La SFCU 20 et le système IFE 30 peuvent être reliés de manière filaire à l'unité de contrôle électronique ECU 40 afin de gérer les échanges de données internes. En pratique, ces échanges utilisent différents bus de communication, tels qu'une interface numérique sériel 81, typiquement selon la norme RS-485 (EIA-485), ainsi que des bus CAN haute vitesse 82 et basse vitesse 83.

Dans l'exemple illustré, ces différentes liaisons s'opèrent selon des schémas maître-esclave, représentés respectivement par les références M1, M2, M3 pour les maîtres et S1, S2, S3 pour les esclaves. Ainsi, les paires S1-M1, S2-M2 et S3-M3 correspondent respectivement aux schémas maître-esclave des liaisons 81, 82 et 83. Les liaisons 82 et 83 comportent également la fourniture d'alimentation électrique sur leurs lignes, en plus des signaux CAN.

Il est à noter que d'autres standards et protocoles de communication peuvent être envisagés en alternative ou en complément, notamment Ethernet, ARINC 429 ou encore AFDX (marque déposée), afin de s'adapter à différents environnements avioniques ou exigences spécifiques des avionneurs.

L'ECU 40 reçoit les commandes validées transmises par la SFCU 20 et pilote physiquement des actionneurs et effecteurs du siège regroupés au sein d'un ensemble d'actionnement 50. Cet ensemble d'actionnement 50 inclut typiquement plusieurs éléments, dont des actionneurs mécaniques 51 servant à ajuster et à convertir le siège, une lumière de lecture 52, une lumière d'ambiance 53 et divers autres équipements 54 tels que des systèmes de ventilation locale ou des systèmes de réglage des stores, selon les configurations propres à chaque classe de confort.

L'ECU 40 reçoit également une alimentation électrique E, provenant par exemple d'un réseau de 115 V en courant alternatif conforme aux standards aéronautiques usuels.

Par ailleurs, un port de maintenance 60 relié à l'ECU 40 est prévu pour permettre aux équipes techniques de diagnostiquer le fonctionnement global du système, de procéder à des mises à jour logicielles ou d'effectuer des opérations de dépannage en cas de dysfonctionnement. Selon différentes variantes possibles de réalisation, ce port de maintenance 60 peut également être directement accessible depuis la station d'accueil 12, ou encore faire l'objet d'une connexion sécurisée accessible par la tablette tactile 11 au moyen d'outils logiciels dédiés.

Il convient de noter que l'architecture détaillée ici peut se décliner selon plusieurs variantes alternatives. Par exemple, le module de médiation 121 pourrait être physiquement séparé de la station d'accueil 12 et intégré dans un boîtier distinct.

De même, la liaison Ethernet 85 reliant la station d'accueil 12 au système IFE 30 pourrait être remplacée par un autre type de réseau local adapté.

Le système de contrôle 100 tel que décrit précédemment peut être installé à bord d'un aéronef selon différentes configurations d'intégration mécanique et spatiale, en fonction des choix d'aménagement intérieur et des contraintes propres à chaque modèle d'aéronef ou à chaque classe de confort. En particulier, la tablette tactile 11 et sa station d'accueil 12 peuvent être disposées à proximité immédiate du siège passager, de façon à permettre un accès ergonomique et intuitif aux commandes durant toutes les phases du vol.

La figure 2 représente, à cet égard, l'unité de contrôle 10 installée dans un environnement de siège passager 200, avec la tablette 11 placée dans sa station d'accueil 12, dans un logement prévu à cet effet. Ce logement est également équipé d'au moins un port nécessaire au branchement et à la connexion de la tablette 11.

La tablette 11 comporte un écran d'affichage tactile 111 permettant au passager d'accéder aux différentes fonctionnalités de commande offertes. Par exemple, l'écran 111 est un écran LCD d'une taille de l'ordre de 10 pouces (environ 25 centimètres), cette dimension permettant une bonne lisibilité et un confort d'interaction pour le passager.

En outre, la station d'accueil 12 comporte une barre de commande rapide 13 permettant au passager un accès direct et simplifié à certaines fonctionnalités préférentielles sans devoir nécessairement interagir avec l'écran tactile. Cette barre de commande rapide 13 comporte des boutons fonctionnels spécifiques tels qu'un bouton 131 permettant l'appel direct du service de repas ou de rafraîchissements, et un bouton 132 destiné au réglage de l'inclinaison du siège.

Naturellement, d'autres boutons fonctionnels sont prévus sur cette barre de commande rapide 13, selon les choix et préférences de la compagnie aérienne ou des avionneurs, et peuvent inclure par exemple la commande de l'éclairage individuel, la ventilation, l'appel du personnel de bord, le réglage des stores, ou encore une touche d'accès direct aux services d'IFE. Ces boutons sont préférentiellement configurables par l'utilisateur ou selon des réglages préprogrammés en fonction des classes de confort et des spécificités du siège sur lequel est installé l'unité de contrôle 10.

La figure 3 représente un exemple de barre de commande rapide 13, comprenant une série d'icônes permettant l'accès direct aux fonctions prioritaires ou fréquemment utilisées par les passagers. Par exemple, le bouton 131 déclenche une commande directe vers le personnel navigant pour solliciter un service tel qu'un repas ou une boisson, tandis que le bouton 132 permet une commande rapide d'ajustement de la position du siège, comme un basculement vers une position de détente. D'autres boutons permettent d'accéder rapidement aux réglages fins de la position du siège (inclinaison dossier, hauteur repose-jambes), au contrôle direct de la lumière de lecture individuelle ou à l'activation d'un mode TTL.

La tablette tactile 11 peut comporter, dans certaines variantes de réalisation, un voyant ou indicateur visuel permettant d'informer l'utilisateur sur son état opérationnel, son niveau de charge ou encore l'état de la connexion avec la station d'accueil 12.

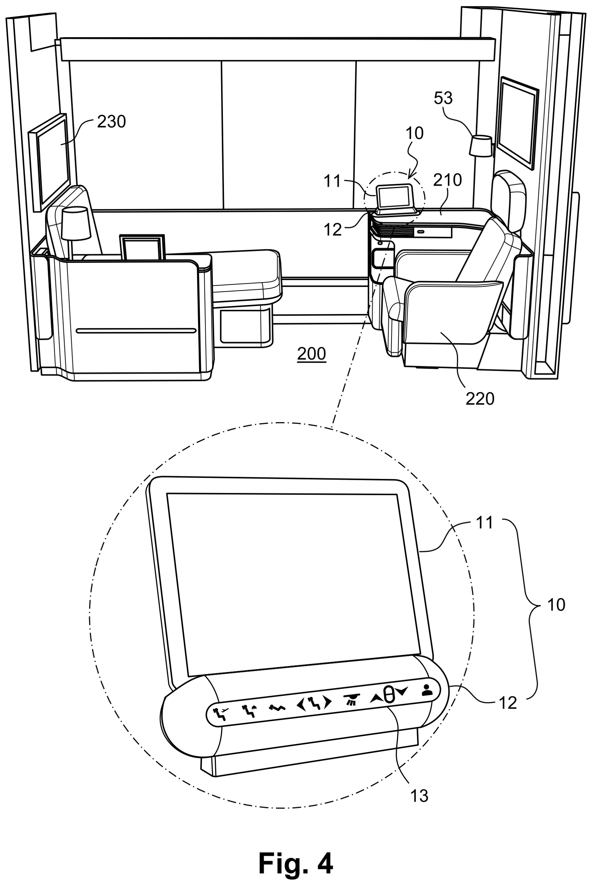

La figure 4 représente un exemple d'installation de l'unité de contrôle 10 dans un aménagement intérieur spécifique d'aéronef, et plus spécifiquement dans un environnement de siège 200 correspondant typiquement à un espace individuel en première classe.

Dans cet aménagement, l'unité de contrôle 10 est installée sur une console 210 adjacente à un siège passager 220, afin d'être à portée immédiate du passager. Cette disposition particulière facilite l'accès à la tablette tactile 11 et à sa station d'accueil même en position assise du passager.

Selon l'exemple illustré, l'environnement de siège 200 intègre également d'autres équipements de confort général du passager. Parmi ces équipements figure notamment un écran individuel 230 destiné à afficher les contenus multimédias et les programmes du système IFE. De même, l'environnement 200 comporte une lumière d'ambiance 53, positionnée pour assurer un éclairage réglable de la zone occupée par le passager.

Avant de décrire plus spécifiquement une séquence de fonctionnement du système de contrôle, un exemple particulier de l'architecture électronique du système est donné ci-après. Cet exemple est bien entendu non limitatif et ne reflète qu'une façon de faire parmi d'autres.

### Exemple

L'unité de contrôle 10 selon l'invention, qui comprend la tablette tactile 11 ainsi que la station d'accueil 12 et qui est spécialement configurée pour assurer une communication sécurisée entre ladite tablette et les systèmes embarqués associés à l'environnement du siège passager, présente une architecture au cœur de laquelle se trouve le module de médiation 121, intégré dans la station d'accueil et comprenant principalement un microcontrôleur central de type STM32H750. Ce microcontrôleur assure un traitement avancé et dynamique des commandes envoyées par la tablette tactile.

La tablette tactile intègre quant à elle un processeur embarqué, assurant le traitement local des interactions utilisateur, l'affichage via un écran tactile LCD à interface LVDS haute résolution, et la communication sans-fil via un module Wi-Fi dédié. Cette tablette possède également un stockage intégré (carte SD) ainsi que des circuits spécialisés pour l'alimentation autonome, régulée par une batterie intelligente avec un système avancé de gestion de l'énergie et de supervision électronique (régulateurs de tension multiples, monitoring tension-courant). Lorsqu'elle communique avec la station d'accueil, la tablette transmet les commandes via une liaison sans-fil sécurisée (Wi-Fi) ou par connexion filaire Ethernet directe lorsqu'elle est « dockée » (position de stockage). Ces commandes sont reçues par le microcontrôleur au sein du module de médiation, lequel détermine précisément leur nature : commandes relatives à l'actionnement du siège ou commandes liées au divertissement en vol (IFE). Le microcontrôleur traite alors les commandes d'actionnement en les acheminant vers la SFCU par l'intermédiaire d'un bus CAN sécurisé et dédié, permettant ainsi un pilotage précis des actionneurs et effecteurs du siège tels que les moteurs, les éclairages ou d'autres dispositifs de confort.

Parallèlement, le microcontrôleur dirige les commandes de divertissement vers un commutateur Ethernet manageable (Ethernet Managed Switch). Ce commutateur Ethernet, associé à des circuits magnétiques assurant l'isolation galvanique, permet une liaison directe et protégée avec le système IFE via une connexion Ethernet spécifique, assurant ainsi la séparation physique et logique nécessaire entre les flux critiques et non critiques.

Cette architecture matérielle et logicielle combinée, regroupée au sein du module de médiation, garantit la ségrégation complète entre les flux critiques (actionnement du siège) et les flux non critiques (services IFE). Elle répond ainsi aux exigences strictes de certification DAL D, permettant l'utilisation sûre et ininterrompue de l'unité de contrôle par le passager durant toutes les phases du vol, y compris les phases critiques de roulage, décollage et atterrissage.

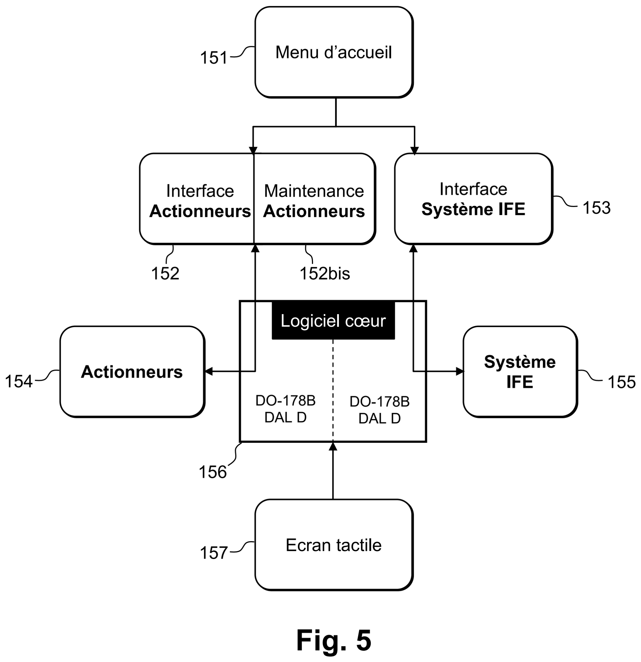

La figure 5 représente une architecture logicielle de l'unité de contrôle conforme à l'invention, développée pour satisfaire aux exigences strictes de sécurité avionique de niveau DAL D selon la norme DO-178B.

À partir d'un menu d'accueil 151, l'utilisateur accède à trois ensembles logiciels principaux : une interface utilisateur dédiée à la commande des actionneurs 152, un logiciel spécifique pour la maintenance des actionneurs 152bis, ainsi qu'une interface utilisateur dédiée au divertissement en vol, dite interface utilisateur IFE 153.

Ces modules logiciels interagissent directement avec un logiciel cœur 156, constituant l'élément central de médiation du système. Ce logiciel cœur 156 est spécifiquement conçu pour respecter les normes avioniques DO-178B au niveau DAL D, garantissant ainsi une fiabilité élevée et une robustesse face aux erreurs logicielles potentielles.

Le logiciel cœur 156 réalise une séparation rigoureuse entre les flux critiques destinés aux logiciels actionneurs 154 et les flux non critiques destinés au logiciels système IFE 155. Il assure que les commandes validées destinées aux actionneurs 154 et celles destinées au système IFE 155 restent strictement isolées, empêchant toute contamination croisée ou interférence indésirable entre ces deux domaines fonctionnels.

L'ensemble logiciel intègre également un module logiciel de configuration d'écran tactile 157, permettant de paramétrer les interactions tactiles selon les spécificités du siège ou les préférences du transporteur aérien. Ce logiciel communique directement avec le logiciel cœur 156 afin d'assurer une cohérence ergonomique et fonctionnelle des commandes et interactions utilisateur.

Cette architecture modulaire à forte ségrégation permet ainsi une utilisation sécurisée et continue de l'unité de contrôle pendant l'ensemble des phases de vol, notamment durant les phases critiques TTL.

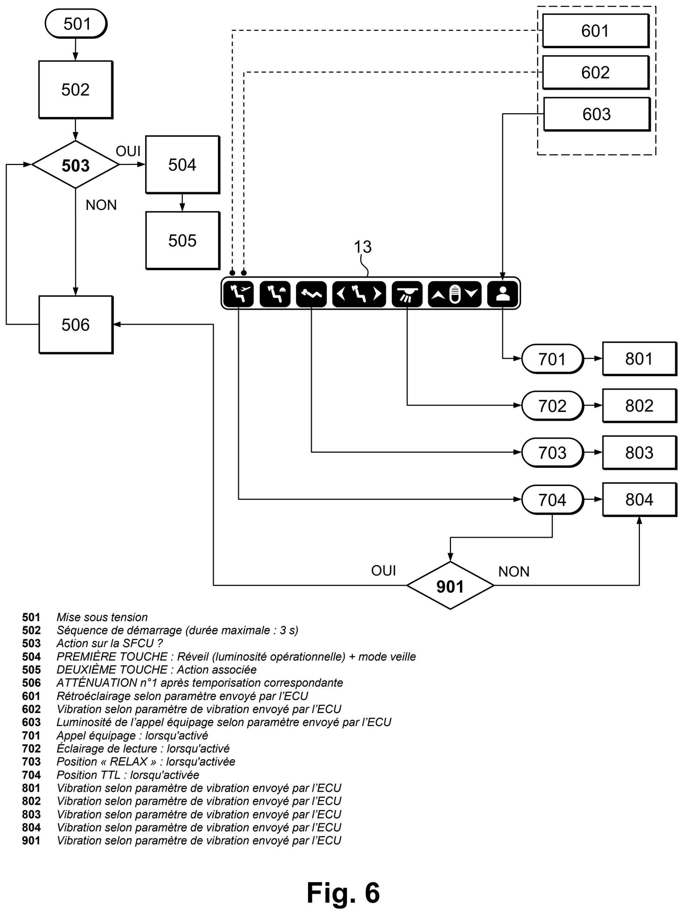

La figure 6 représente un schéma simplifié décrivant un exemple de processus logique de commande associé à l'utilisation de la barre de contrôle rapide 13. Ce schéma illustre le déroulement fonctionnel depuis la mise sous tension 501 du dispositif jusqu'à la réalisation effective d'une commande. Après une mise sous tension initiale, une séquence de démarrages 502 ne dépassant pas 3 secondes est initiée afin de rendre la SFCU pleinement opérationnelle. Une vérification 503 permet alors de déterminer si une action sur la SFCU est détectée.

Si une action est effectivement détectée (oui), une première pression 504 sur l'un des boutons tactiles active la SFCU en réveillant notamment le rétroéclairage en mode opérationnel (luminosité normale). Une seconde pression 505 sur ce même bouton entraîne la réalisation de l'action associée, telle qu'une commande de siège, d'éclairage ou d'appel de l'équipage. En l'absence de pression sur l'un des boutons (non), le dispositif active un premier mode de réduction progressive de luminosité (DIM #1) 506 après un certain délai.

Par ailleurs, la barre de contrôle bénéficie d'une gestion optimisée de l'ergonomie tactile : son rétroéclairage 601 est paramétré par l'unité de contrôle électronique ECU, une vibration (retour haptique) 602 est déclenchée selon un paramètre spécifique défini par l'ECU afin d'informer l'utilisateur de la prise en compte de sa commande, et l'intensité lumineuse du bouton d'appel du personnel navigant 603 est également réglée selon des paramètres transmis par l'ECU.

Plus précisément, différentes commandes peuvent être sélectionnées par l'utilisateur : appel du personnel de cabine 701, commande de la lampe de lecture 702, réglage en position « RELAX » du siège 703 ou activation du mode TTL 704. Chaque pression associée à ces commandes génère systématiquement un retour haptique sous la forme d'une vibration paramétrée par l'ECU, respectivement 801, 802, 803 et 804.

Enfin, un contrôle additionnel 901 valide la fin de l'action sur la SFCU et détermine, en fonction des paramètres transmis par l'ECU, si une nouvelle vibration de confirmation doit être émise.

En outre, l'unité de contrôle 10 comporte un système de verrouillage mécanique (non représenté) de la tablette tactile 11 dans sa station d'accueil 12, permettant d'assurer à la fois la sécurité durant les phases critiques du vol (TTL) et une protection efficace contre d'éventuels vols par les passagers.

Dans les solutions connues de l'art antérieur, ce verrouillage est traditionnellement réalisé à l'aide d'un électroaimant qui libère la tablette en cas de coupure accidentelle de l'alimentation électrique, exposant ainsi la tablette à un risque de chute.

Conformément à l'invention, la station d'accueil comprend un mécanisme de verrouillage basé sur l'utilisation d'un servomoteur couplé à un système mécanique de verrou coulissant ou rotatif, configuré pour maintenir une position fermée et verrouillée de manière stable même en cas de perte totale d'alimentation électrique. Par exemple, ce servomoteur est associé à un engrenage irréversible ou à une vis sans fin, dont la géométrie empêche mécaniquement tout retour spontané vers une position ouverte en l'absence d'une commande électrique explicite.

En fonctionnement normal, le servomoteur reçoit une commande électrique provenant d'une unité électronique intégrée à la station d'accueil, par exemple pilotée directement par l'ECU ou la SFCU, pour engager ou désengager la position verrouillée selon la phase du vol et les procédures définies par la compagnie aérienne. Lorsque la tablette est positionnée dans sa station d'accueil, la commande de verrouillage provoque la rotation ou la translation du mécanisme, entraînant ainsi un crochet ou un élément équivalent dans une position d'engagement stable avec un élément complémentaire situé sur la tablette tactile elle-même.

En cas de coupure de courant ou d'interruption accidentelle de l'alimentation électrique, le mécanisme reste stablement en position verrouillée, contrairement aux solutions électromagnétiques traditionnelles.

Pour déverrouiller la tablette, une commande explicite, générée par exemple à partir d'une autorisation électronique spécifique active le servomoteur en sens inverse, provoquant le dégagement mécanique de la tablette.

## Revendications

1. Unité de contrôle (10) permettant à un passager d'aéronef de commander son environnement de siège (200), ladite unité comprenant une tablette tactile (11) apte à communiquer sans-fil et une station d'accueil (12) capable de recevoir ladite tablette, ladite station étant configurée pour être reliée à une unité de contrôle fonctionnel du siège (20), dite SFCU, et à un système de divertissement en vol (30), dit système IFE, la tablette tactile (11) étant configurée pour envoyer à la station d'accueil (12) des commandes d'actionnement du siège et des commandes de divertissement, ladite unité de contrôle étant **caractérisée en ce que** la station d'accueil (12) comprend un module de médiation (121) configuré pour opérer une ségrégation entre les commandes d'actionnement du siège et les commandes de divertissement, et **en ce que** le module de médiation (121) est configuré pour acheminer les commandes d'actionnement du siège vers la SFCU (20) reliée à la station d'accueil (12) et pour acheminer les commandes de divertissement vers le système IFE (30) via une liaison directe (85).

2. Unité de contrôle selon la revendication 1, dans laquelle la SFCU (20) est intégrée à la station d'accueil (12).

3. Unité de contrôle selon la revendication 1 ou 2, dans laquelle la liaison directe (85) est un câble Ethernet et dans laquelle les commandes d'actionnement du siège sont transmises à la SFCU (20) via des bus de données CAN (82, 83).

4. Unité de contrôle selon l'une des revendications précédentes, dans laquelle le module de médiation (121) comprend des moyens matériels et logiciels de filtration et d'analyse des trames échangées entre la tablette tactile (11) et la station d'accueil (12).

5. Unité de contrôle selon la revendication 4, dans laquelle les moyens matériels et logiciels du module de médiation (121) comprennent au moins un commutateur intelligent.

6. Unité de contrôle selon l'une des revendications précédentes, comprenant en outre un moyen de verrouillage mécanique de la tablette tactile (11) dans la station d'accueil (12), ledit moyen de verrouillage comportant un servomoteur maintenant une position verrouillée en cas de coupure d'alimentation électrique.

7. Système de contrôle (100) d'un environnement de siège (200) pour passager d'aéronef, comprenant une unité de contrôle (10) selon l'une des revendications précédentes, une SFCU (20), un système IFE (30) et une unité de contrôle électronique (40), dite ECU.

8. Système de contrôle selon la revendication 8, dans lequel la SFCU (20) transmet les commandes d'actionnement reçues de l'unité de contrôle (10) à l'ECU (40), ladite ECU (40) étant configurée pour piloter directement un ensemble d'actionneurs (50) de l'environnement de siège (200).

9. Aéronef, **caractérisé en ce qu'**il comprend au moins un système de contrôle (100) selon la revendication 7 ou 8.
